Europäisches Patentamt

European Patent Office

Office européen des brevets

(19)

(11) Publication number: **0 087 607**
**A2**

# EUROPEAN PATENT APPLICATION

(12)

(21) Application number: **83101030.1**

(22) Date of filing: **03.02.83**

(51) Int. Cl.³: **B 60 B 7/00**
**B 29 F 1/12, B 29 C 9/00**

(30) Priority: **25.02.82 JP 29191/82**

(43) Date of publication of application:
**07.09.83 Bulletin 83/36**

(84) Designated Contracting States:
**DE FR GB**

(71) Applicant: **NISSAN MOTOR COMPANY, LIMITED**
**No.2, Takara-cho, Kanagawa-ku**
**Yokohama City(JP)**

(71) Applicant: **MARUI INDUSTRIAL CO., LTD.**
**No. 5-1-10, Sotokanda Chiyoda-ku**
**Tokyo(JP)**

(72) Inventor: **Kanamori, Hiroshi**
**No. 3-7-22, Shinohara-higashi**
**Kohoku-ku Yokohama City(JP)**

(72) Inventor: **Saga, Tokuji**
**No. 25-2, Miyagaya Nishi-ku**
**Yokohama City(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **A decorative member for an automotive road wheel or the like and method of producing same.**

(57) A hub cap for an automotive wheel is formed by (a) injecting a first synthetic resin into a mould to form a cup-shaped member having one or more embossed indicia (emblem, name etc.) on the convex surface thereof, recesses in the concave surface opposite the indica and passages which lead from the recess to the convex surface, and (b) injecting a second different coloured synthetic resin into the mould so as to form a second cup-shaped member on the convex surace of the first one in a manner that the indicia is visible through the second member and the second member fills the passages and recesses to securely lock the two members together.

**FIG.5**

EP 0 087 607 A2

# A DECORATIVE MEMBER FOR AN AUTOMOTIVE ROAD WHEEL
# OR THE LIKE AND METHOD OF PRODUCING SAME

## BACKGROUND OF THE INVENTION

### Field of the Invention

The present invention relates generally to an automotive wheel hub cap and more specifically to a hub cap which can be produced simply via a single double injection moulding process.

### Description of the Prior Art

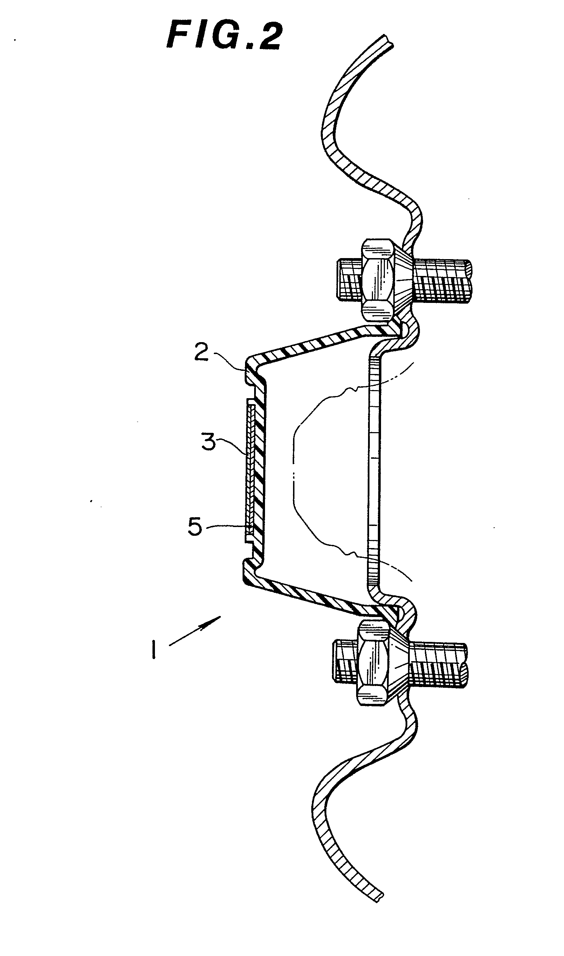

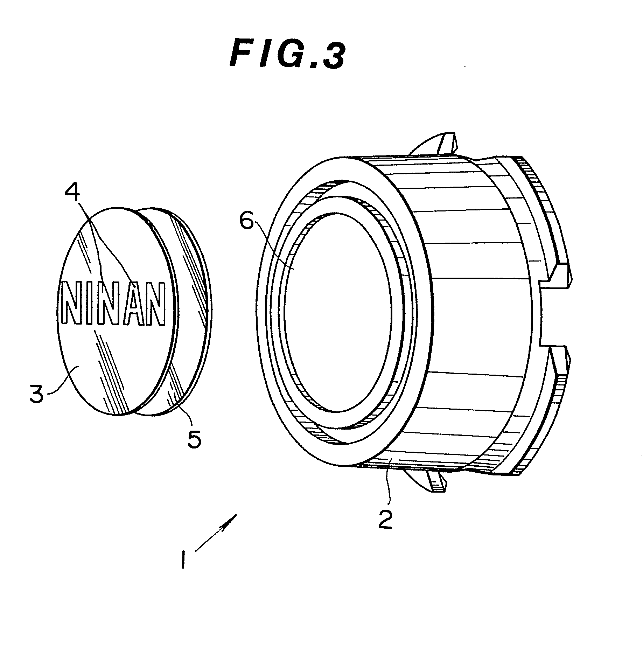

In a previously proposed arrangement shown in Figs. 2 and 3 of the drawings, a hub cap 1 has been manufactured by either press forming or moulding a suitable cup-shaped member 2, punching out an aluminium disc 3, forming an emblem or other indicia 4 on the disc by etching, anodizing or the like, and then attaching the disc to the cup shaped member using double faced adhesive tape 5.

This arrangement has suffered from the drawbacks of requiring a plurality of relatively expensive operations to produce and further suffered from the problem that dirt tends to collect in the inevitable clearances defined between the edge of the disc 3 and the recess 6 formed in the cup shaped member 2 for receiving same. This of course has lead to a loss of appearance with the

0087607

passage of time.

This arrangement has also suffered from the drawback that it has lacked a suitable mounting marker and therefore has been difficult to locate on the road wheel in a manner that ensures that it will not vibrate to a position wherein the apertures formed in the periphery of the mounting flange, coincide with the wheel nuts and the hub cap permitted to detach from the wheel.

SUMMARY OF THE INVENTION

It is an object of the present invention to provide a hub cap which can be produced using the minimum number of operations which retains its originally appearance despite repeated soiling and which has a mounting marker for facilitating mounting of the unit on a road wheel.

A first aspect of the present invnetion comes in a decorative member for an automotive road wheel or the like, comprising, a first member having a first colour and which is essentially cup-shaped, the first member being formed with an embossed indicia on a convex surface thereof, and a second member having a second colour, which is essentially cup-shaped, and which is disposed in intimate contact on the convex surface of the first member, and means defining a through hole in the second member in which the indicia is received.

A further aspect of the invention comes in a method of forming a decorative member for an automotive road wheel or the like comprising the steps of, forming a first member so as to have an essentially cup-shape and an embossed indicia on a convex surface thereof, and subsequently forming a second member on the convex surface of the first member in a manner that the second member has a through hole therein in which the indicia is received.

In more specific terms, an embodiment of the invention is formed by firstly injecting a first synthetic resin into a mould to form a cup-shaped member having (a) one or more embossed indicia (emblem, name etc.) on the convex surface thereof, (b) recesses in the concave surface opposite the indica and (c) passages which lead from the recesss to the convex surface, and secondly injecting a second different coloured synthetic resin into the mould so as to form a second cup-shaped member on the convex surface of the first one in a manner that the one or more indicia is visible through the second member and the second member fills the passages and recesses to securely lock the two members together.

BRIEF SUMMARY OF THE DRAWINGS

The features and advantages of the arrangement of the present invention will become more clearly appreciated from the following description taken in conjunction with the accompanying drawings in which:

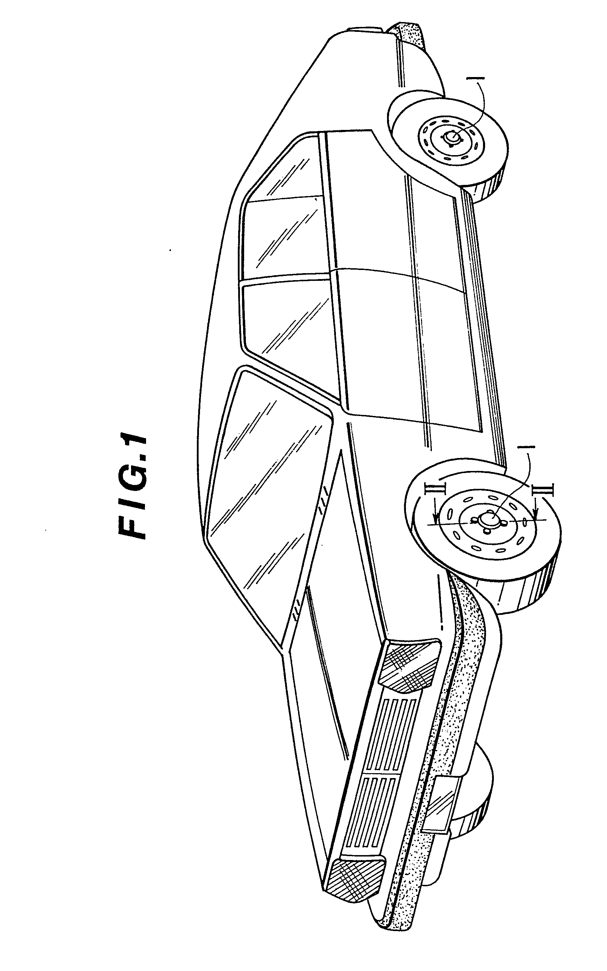

Fig. 1 shows a vehicle having road wheels which are provided with prior art decorative hub caps;

Fig. 2 is a sectional view taken along section line II-II of Fig. 1, showing in detail the prior art hub cap discussed in the opening paragraphs of the present disclosure;

Fig. 3 is an exploded isometric view of the prior art arrangement shown in Fig. 2;

Figs. 4 and 5 are isometric views of an embodiment of the present invention;

Figs. 6 and 7 are sectional views illustrating the moulding process via which the embodiment of the present invention is formed;

Fig. 8 is a plan view of a typical indicia formed by the process shown in Figs. 6 and 7;

Fig. 9 is a sectional view taken along section line IX - IX of Fig. 8;

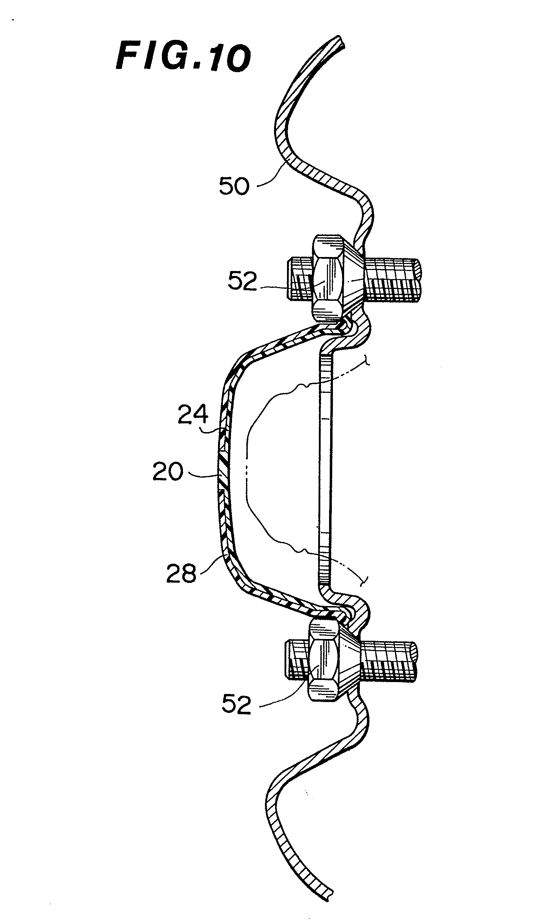

Fig. 10 is a sectional view of the embodiment of the present invention mounted on a road wheel; and

Figs. 11 and 12 are plan views illustrating the method of installation of the hub cap according the present invention on a road wheel.

DETAILED DESCRIPTION OF THE PREFERRED EMBODIMENT

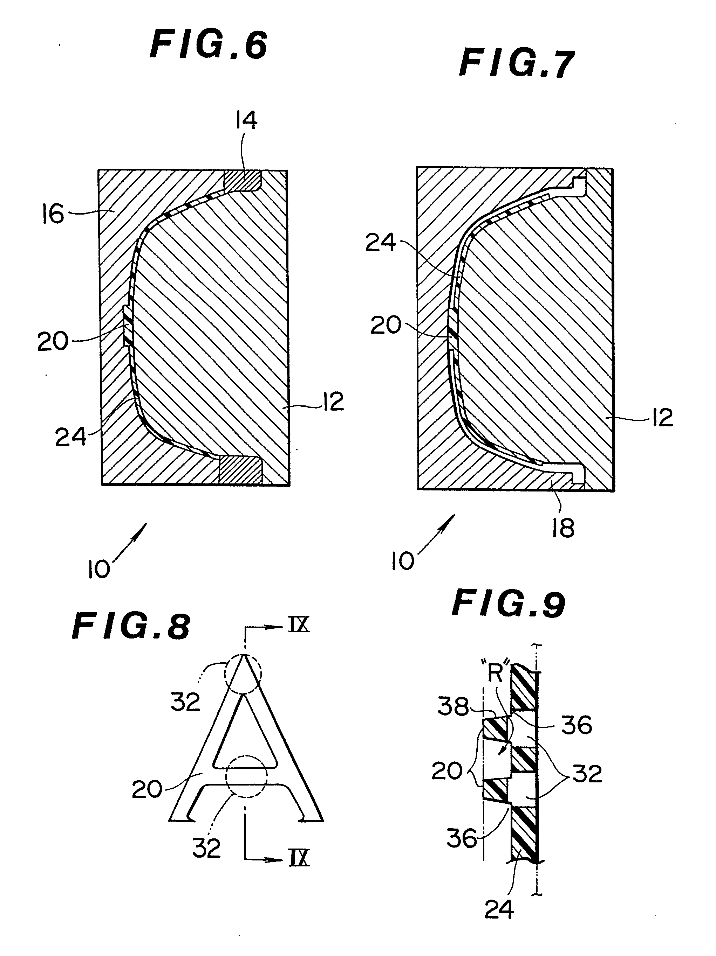

Turning firstly to Figs. 6 and 7 of the drawings explanation of the method via which the hub cap 8 according to the present invention is formed, will be given. As seen in Fig. 6 a synthetic resin is injected into a mould 10 comprised of die blocks 12, 14 and 16. This resin may, by way of example only, be a red ABS plastic. Subsequently, the die blocks 14 and 16 are replace with a single member 18 and second injection of synthetic resin made. The second resin should, for the maximum effect, be of a colour and composition different from that of the first injection. In this case, by way of example, the second resin may be a black fibre glass reinforced nylon. The finished hub cap may be removed from the mould subsequent to suitable setting of the resins.

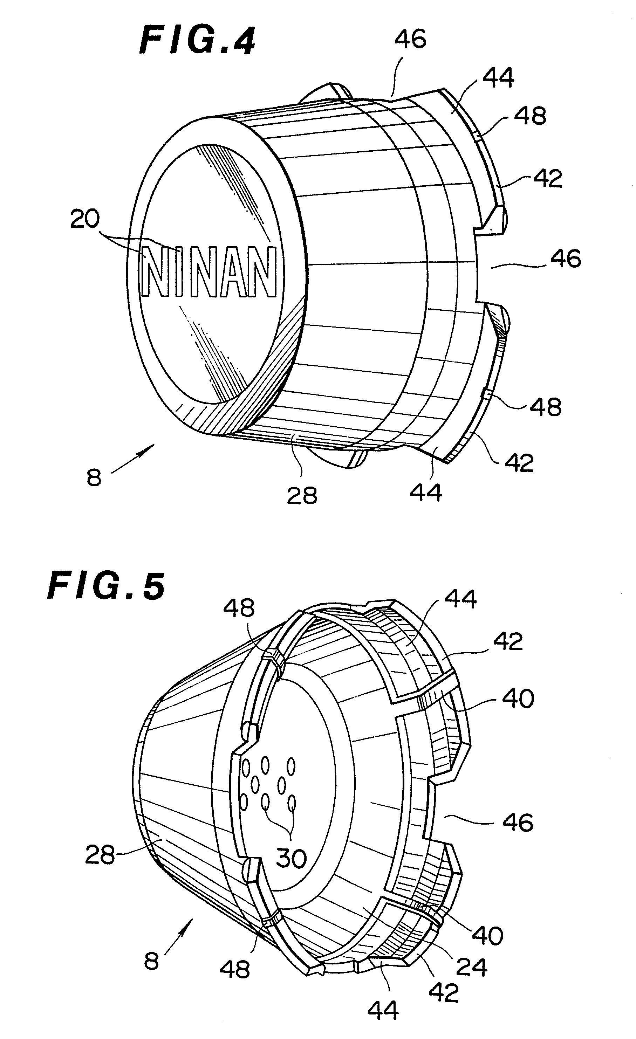

As seen in Figs. 6 the die block is formed so that upon injecting the first synthetic resin, a suitable embossed indicia or emblem 20 is formed on the outer or convex surface of the first cup-shaped member 24. By way of example only the indica are selected to be the letters N-I-N-A-N (see Fig. 4).

In order to fixedly secure the two members together, the arrangement provides in addition to the adhesion between the convex surface of the first member and the inner or concave surface of the second member 28, a plurality of locking blocks 30 (see Fig. 5). These blocks (30) are produced by moulding the first member 24 so that one or more recesses 32 are formed in the concave surface thereof at locations opposite suitable portions of the indicia 20 (see Fig. 8 by way of example) and further formed with passages 36 which lead from the recesses 32 to the convex surface of the first member 24. With this arrangement, upon injection of the second sythetic resin into the mould, a flow "R" of same will pass as shown, through the passages 36 filling same along with the recesses 32.

In the illustrated embodiment, it is preferred that the cross section of the indicia 20 be tapered (viz., be wedge shaped) and that the passages 36 open at sites located in the approximately perpendicular wall sections 38 of the indicia 20. This allows the flow "R" to pass through the passages 36 as indicated and for the second member to be moulded on top of the first so that any clearances between the "perpendicular" wall sections 38 of the indicia 20 and the second member 28 are rendered invisible.

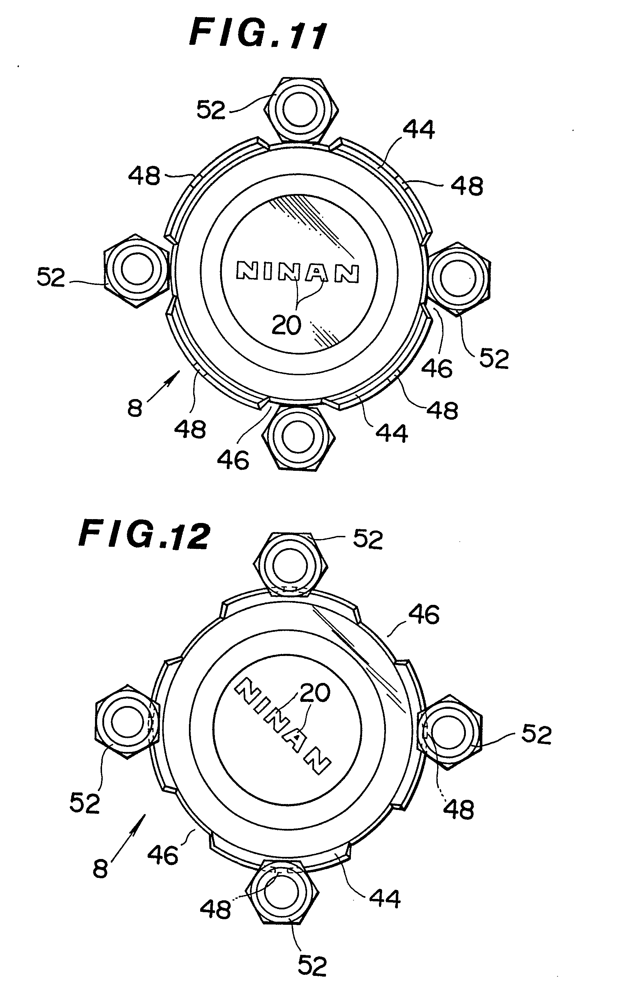

The present invention further makes unique use of the runners 40 which are inevitably produced during such injection moulding operations to provide mounting markers. That is say, as shown in Fig. 5, the runners 40 are arranged to extend to the peripheral edge 42 of the apertured mounting flange 44 at locations essentially mid-way between adjacent apertures 46 so as to be visible thereof. Thus, when mounting a hub cap 8 provided with these "markers" 48 at the peripheral edge of the apertured mounting flange 44, an operator is able to place the hub cap 8 on the wheel 50 as shown in Fig. 11 and then rotate same until the markers 48 disappear behind the wheel nuts 52 which may then be suitable tighten down. With this, a reasonably accurate location of the hub cap 8 on the road wheel 50 with respect to the securing wheel nuts 52 is rendered possible and the possiblity of the hub cap 8 detaching from the wheel, minimized.

WHAT IS CLAIMED IS:

1. A decorative member for an automotive road wheel or the like, comprising:

a first member having a first colour and which is essentially cup-shaped, said first member being formed with an embossed indicia on a convex surface thereof; and

a second member having a second colour and which is essentially cup-shaped, said second member being disposed in intimate contact on the convex surface of said first member; and

means defining a through hole in said second member in which said indicia is received.

2. A decorative member as claimed in claim 1, further comprising;

means defining a recess in a concave surface of said first member and passages leading from said recess to said convex surface, and wherein

said second member is arranged to have a portion which extends through said passages and fills said recess.

3. A decorative member as claimed in claim 2, wherein said recess is formed in said concave surface at a location essentially opposite said indicia.

4.    A decorative member as claimed in claim 1, wherein said second member has an attachment flange formed about the periphery thereof, said attachment flange being formed with apertures at spaced intervals thereabout, and wherein

said first member has runner portions which each extend to and terminate at the peripheral edge of said attachment flange at a location essential mid-way between two adjacent apertures so as to be visible for facilitating the location of said decorative member on said wheel.

5    A method of forming a decorative member for an automotive road wheel or the like, comprising the steps of:

forming a first member so as to have an essentially cup-shape and an embossed indicia on a convex surface thereof; and

forming a second member on said convex surface of said first member in a manner that said second member has a through hole therein in which said indicia is received.

6.    A method as claimed in claim 5, further comprising the steps of;

forming a recess in a concave surface of said first member and passages which lead from said recess to said convex surface; and

forming said second member so as to have a portion which extends through said passages and fills said recess.

7. A method as claimed in claim 5, further comprising the steps of:

forming an attachment flange about the periphery of said second member;

forming apertures in said flange at spaced intervals about the periphery of said attachment flange; and

forming said first member with runner portions which extend to the peripheral edge of said attachment flange at locations essentially intermediate of adjacent aperatures and so as to be visible for facilitating the location of said decorative member on said wheel.

8. A method as claimed in claim 5, wherein said step of forming said first member is carried out by injecting a first synthetic resin into a mould and said step of forming said second member is carried out by rearranging said mould and injecting a second synthetic resin having a colour different from said first resin, into said mould.

FIG.1

# FIG.2

# FIG.3

**FIG.4**

**FIG.5**

**FIG.6**

**FIG.7**

**FIG.8**

**FIG.9**

**FIG.10**

50

52

24

20

28

52

# FIG.11

# FIG.12